# EUROPEAN PATENT APPLICATION

(11) **EP 4 768 825 A1**
(43) Date of publication of application: **01.07.2026**
(21) Application number: 24894117.1
(22) Date of filing: 18.11.2024
(51) Int. Cl.: F25D 11/00, B60P 3/20, H04L 12/28

(54) **CONTROL DEVICE, REFRIGERATION SYSTEM FOR VEHICLE, AND REFRIGERATION VEHICLE**

(30) Priority: 21.11.2023 JP 2023197403
(71) Applicant: Mitsubishi Heavy Industries Thermal Systems, Ltd., Tokyo 100-8332 (JP)
(72) Inventor: JINNO, Hiroki, Tokyo 100-8332 (JP); FU, Qiangfei, Tokyo 100-8332 (JP); ABE, Hayato, Tokyo 100-8332 (JP)
(74) Representative: Cabinet Beau de Loménie
(86) International application number: PCT/JP2024/040844
(87) International publication number: WO 2025/110126

(57) **Abstract**

A control device according to the present invention is provided in a refrigeration system for a vehicle having a refrigeration device, and performs supply control of electric power supplied to the refrigeration device from a power source device connected to the refrigeration device. The control device includes a main connection circuit that has a communication connection terminal according to a predetermined communication method, and that transmits and receives control signals related to supply control of electric power via the communication connection terminal when the power source device is connected to the communication connection terminal, a digital output terminal, and a digital input terminal. The control device also includes an ancillary connection circuit that, when the power source device is connected to the digital output terminal and the digital input terminal, outputs a digital signal indicating an operation state of the refrigeration device from the digital output terminal, and takes in a digital signal specifying the operation state of the refrigeration device via the digital input terminal.

## Description

### Technical Field

The present disclosure relates to a control device, a refrigeration system for a vehicle, and a refrigeration vehicle. Priority is claimed to Japanese Patent Application No. 2023-197403, filed November 21, 2023, the content of which is incorporated herein by reference.

### Background Art

In a refrigeration system for a vehicle mounted on a vehicle to refrigerate a load to be carried, a high-voltage power supply device is attached to the vehicle, and power is supplied to the refrigeration system for a vehicle by the power supply device such that a stable and sufficient cooling capacity is obtained. In recent years, electrification has been advanced even in vehicles such as trucks equipped with a refrigeration system for a vehicle. In a case of an electric vehicle, since a power supply device for vehicle drive mounted on the electric vehicle is a high-voltage power supply device, the power supply device can also be used as a power supply for the refrigeration system for a vehicle.

As described above, the type of power supply device that can be used as a power supply for the refrigeration system for a vehicle is diversified, but a communication method of a control signal transmitted and received by the power supply device for power supply control may not match a communication method supported by the refrigeration system for a vehicle. As means for such a case, for example, means for providing all communication interfaces that conform to communication methods supported by each of power supply devices assumed as connection destinations in the refrigeration system for a vehicle, as in a pump device disclosed in PTL 1, is considered.

### Citation List

### Patent Literature

[PTL 1] Japanese Unexamined Patent Application Publication No. 2019-134606

### Summary of Invention

### Technical Problem

However, as described above, in the refrigeration system for a vehicle, there is a problem that a size of a communication circuit of a control device of the refrigeration system for a vehicle is increased in order to provide a plurality of communication interfaces. In addition, since data formats of the control signals transmitted and received by each of the plurality of communication interfaces are different, there is a problem that a scale of communication software for generating each of the control signals or reading out data included in the control signals is also increased.

The present disclosure has been made to solve the above-described problem, and an object thereof is to provide a control device, a refrigeration system for a vehicle, and a refrigeration vehicle that can be used as a power supply in a case of refrigerating a large number of types of power supply devices while suppressing an increase in a size of a communication circuit of the control device and a scale of communication software.

### Solution to Problem

In order to solve the above-described problem, a control device according to the present disclosure is a control device that is provided in a refrigeration system for a vehicle including a refrigeration device, and that performs supply control of power supplied to the refrigeration device from a power supply device connected to the refrigeration device, the control device including a main connection circuit that includes a communication connection terminal for a predetermined communication method, and that transmits and receives a control signal related to the supply control of the power via the communication connection terminal in a case where the power supply device is connected to the communication connection terminal, and an auxiliary connection circuit that includes a digital output terminal and a digital input terminal, and that outputs a digital signal indicating an operation state of the refrigeration device from the digital output terminal and receives a digital signal for designating the operation state of the refrigeration device at the digital input terminal in a case where the power supply device is connected to the digital output terminal and the digital input terminal.

A refrigeration system for a vehicle according to the present disclosure includes a refrigeration device and a control device, in which the control device includes a main connection circuit that includes a communication connection terminal for a predetermined communication method, and that transmits and receives a control signal related to supply control of power, which is supplied to the refrigeration device from a power supply device connected to the refrigeration device, via the communication connection terminal in a case where the power supply device is connected to the communication connection terminal, and an auxiliary connection circuit that includes a digital output terminal and a digital input terminal, and that outputs a digital signal indicating an operation state of the refrigeration device from the digital output terminal and receives a digital signal for designating the operation state of the refrigeration device at the digital input terminal in a case where the power supply device is connected to the digital output terminal and the digital input terminal.

A refrigeration vehicle according to the present disclosure includes a vehicle body including a power supply device, and a refrigeration system for a vehicle, in which the refrigeration system for a vehicle includes a refrigeration device that is connected to the power supply device and a control device, and the control device includes a main connection circuit that includes a communication connection terminal for a predetermined communication method, and that transmits and receives a control signal related to supply control of power, which is supplied to the refrigeration device from the power supply device, via the communication connection terminal in a case where the power supply device is connected to the communication connection terminal, and an auxiliary connection circuit that includes a digital output terminal and a digital input terminal, and that outputs a digital signal indicating an operation state of the refrigeration device from the digital output terminal and receives a digital signal for designating the operation state of the refrigeration device at the digital input terminal in a case where the power supply device is connected to the digital output terminal and the digital input terminal.

### Advantageous Effects of Invention

The control device, the refrigeration system for a vehicle, and the refrigeration vehicle according to the present disclosure can be used as a power supply in a case of refrigerating a large number of types of power supply devices while suppressing an increase in a size of a communication circuit of the control device and a scale of communication software.

### Brief Description of Drawings

FIG. 1 is a block diagram showing a configuration example of a refrigeration vehicle remote monitoring system according to a first embodiment of the present disclosure.
FIG. 2 is a block diagram showing a configuration example of a refrigeration system for a vehicle according to the first embodiment of the present disclosure.
FIG. 3 is a block diagram showing a connection configuration (part 1) of the refrigeration system for a vehicle and a power supply device according to the first embodiment of the present disclosure.
FIG. 4 is a block diagram showing a connection configuration (part 2) of the refrigeration system for a vehicle and the power supply device according to the first embodiment of the present disclosure.
FIG. 5 is a block diagram showing a connection configuration (part 3) of the refrigeration system for a vehicle and the power supply device according to the first embodiment of the present disclosure.
FIG. 6 is a block diagram showing a connection configuration of a refrigeration system for a vehicle and a power supply device according to a second embodiment of the present disclosure.
FIG. 7 is a block diagram showing a connection configuration of a refrigeration system for a vehicle and a power supply device according to a third embodiment of the present disclosure.
FIG. 8 is a block diagram showing a connection configuration of a refrigeration system for a vehicle and a power supply device according to a fourth embodiment of the present disclosure.

### Description of Embodiments

Hereinafter, a control device, a refrigeration system for a vehicle, and a refrigeration vehicle according to embodiments of the present disclosure will be described with reference to the drawings. In each drawing, the same or corresponding configurations will be described using the same reference numerals, and the description thereof will be appropriately omitted.

### <First Embodiment>

### (System Configuration)

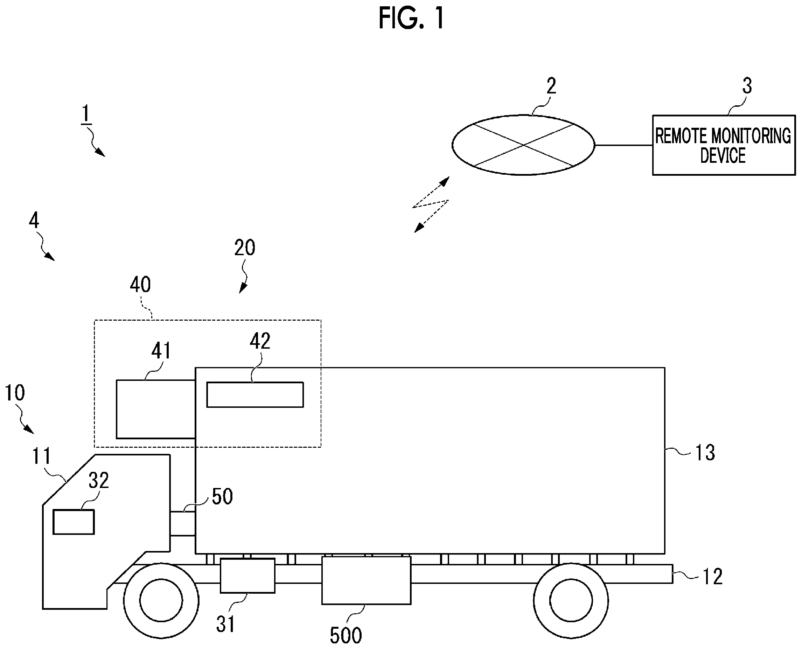

FIG. 1 is a block diagram showing a configuration example of a refrigeration vehicle remote monitoring system 1 according to a first embodiment. The refrigeration vehicle remote monitoring system 1 includes a communication network 2, a remote monitoring device 3, and a refrigeration vehicle 4. The communication network 2 is, for example, a communication network operated by a communication service provider, and is a communication network that can be connected by wired and wireless communication. The remote monitoring device 3 is connected to the communication network 2 by wired communication, for example, and monitors an operation state of a refrigeration system 20 for a vehicle provided in the refrigeration vehicle 4.

The refrigeration vehicle 4 includes a vehicle body 10 and the refrigeration system 20 for a vehicle. The vehicle body 10 is, for example, a truck or a trailer, and may be an electric vehicle or a vehicle driven by an engine such as a diesel vehicle. The vehicle body 10 includes a cabin 11 in which a driver rides, a container 13 for carrying a load, a chassis 12 that supports the cabin 11 and the container 13, and a power supply device 500. In a case where the vehicle body 10 is an electric vehicle, the vehicle body 10 further has a configuration provided in a general electric vehicle, such as a motor for vehicle drive (not shown). In a case where the vehicle body 10 is a vehicle driven by an engine, the vehicle body 10 further has a configuration provided in a general vehicle driven by an engine, such as an engine (not shown).

The power supply device 500 is attached to, for example, the chassis 12. The power supply device 500 supplies direct current high-voltage power and can be charged by power supplied from a commercial power supply. Here, the high voltage is, for example, a voltage of 200 V to 400 V. In a case where the vehicle body 10 is a vehicle driven by an engine, the power supply device 500 is a power supply that supplies power to the refrigeration system 20 for a vehicle. In a case where the vehicle body 10 is an electric vehicle, the power supply device 500 may be a power supply that mainly supplies power for vehicle drive, or may be a power supply device provided separately from the power supply device that supplies power for vehicle drive.

The refrigeration system 20 for a vehicle includes a control device body 31, a cabin controller 32, a refrigeration device 40, and a communication device 50. The control device body 31 is attached to, for example, the chassis 12, is connected to the power supply device 500, and performs supply control of power supplied from the power supply device 500 to the refrigeration device 40. The cabin controller 32 is provided in the cabin 11 and is connected to the control device body 31. The cabin controller 32 receives an operation by the driver or displays a temperature in the container 13 or the like on a monitor.

The refrigeration device 40 includes, for example, an external unit 41 that is attached above the cabin 11 and outside the container 13, and an internal unit 42 that is attached inside the container 13. The external unit 41 is connected to the power supply device 500 and receives power supply from the power supply device 500. The external unit 41 and the internal unit 42 are connected by a pipe through which a refrigerant circulates. The external unit 41 and the internal unit 42 perform heat exchange between the refrigerant and the air by a refrigeration cycle to cool the air inside the container 13. As a result, the container 13 functions as a freezer.

The communication device 50 is connected to the cabin controller 32 and is connected to the communication network 2 by wireless communication. The communication device 50 relays a remote monitoring control signal transmitted and received between the control device body 31 connected to the cabin controller 32 and the remote monitoring device 3.

### (Configuration of Refrigeration System for Vehicle)

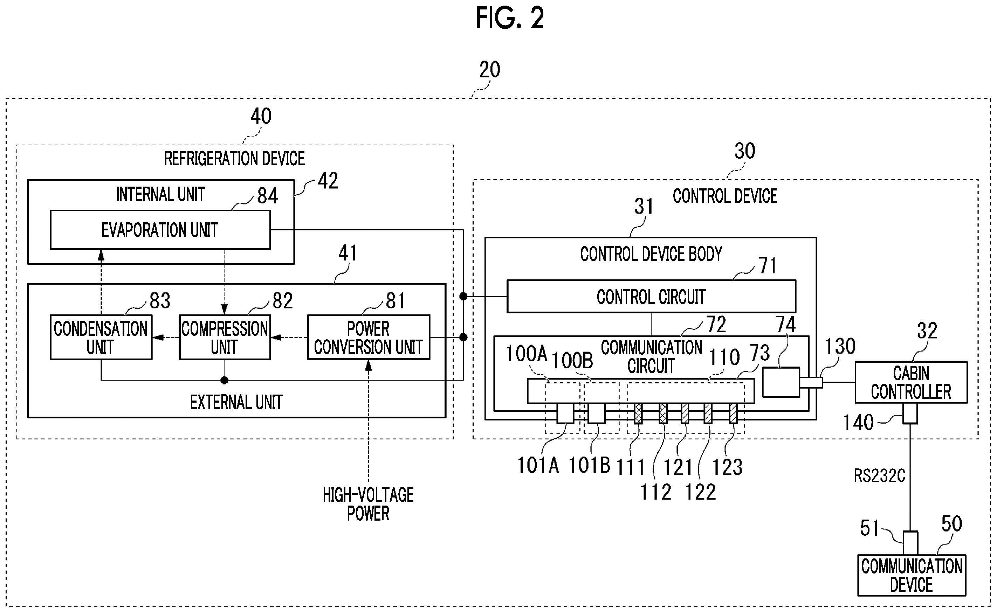

FIG. 2 is a block diagram showing an internal configuration and a connection configuration of the refrigeration system 20 for a vehicle. In FIG. 2, a configuration including the control device body 31 and the cabin controller 32 is shown as a control device 30. In addition, in FIG. 2, electric signals such as a control signal and data, and a wiring through which low-voltage power flows are shown by solid lines, a wiring through which high-voltage power flows is shown by a broken line arrow, and a pipe through which a refrigerant flows is shown by a dotted line arrow.

### (Configuration of Refrigeration Device)

In the refrigeration device 40, the external unit 41 includes a power conversion unit 81, a compression unit 82, and a condensation unit 83. The internal unit 42 includes an evaporation unit 84. The compression unit 82 and the condensation unit 83, the condensation unit 83 and the evaporation unit 84, and the evaporation unit 84 and the compression unit 82 are connected by a pipe, and the pipe is filled with a refrigerant.

In the external unit 41, the power conversion unit 81 includes an inverter that converts the high-voltage direct current power supplied from the power supply device 500 into three-phase alternating current power having a frequency corresponding to the control signal received from the control device body 31 and supplies the three-phase alternating current power to the compression unit 82.

The compression unit 82 includes an accumulator, an electric compressor, and a pipe that connects the accumulator and the electric compressor. The vapor refrigerant flows into the accumulator through a pipe connected to the evaporation unit 84. The accumulator separates the gas and the liquid contained in the vapor refrigerant, and the separated gas refrigerant flows out to the electric compressor. The electric compressor is driven by the three-phase alternating current power supplied from the power conversion unit 81. The electric compressor sucks the gas refrigerant flowing out of the accumulator, and compresses the sucked gas refrigerant and discharges the compressed gas refrigerant to the pipe connected to the condensation unit 83.

The condensation unit 83 includes a condenser, a fan, a receiver, a pipe that connects the condenser and the receiver, and a solenoid-type electronic valve that is inserted into a pipe connected to each of the condenser and the receiver and that adjusts a flow rate of the refrigerant. An opening degree of the electronic valve is adjusted in response to the control signal received from the control device body 31. The condenser is connected to the electric compressor of the compression unit 82 through the pipe, and when the high-pressure gas refrigerant discharged from the electric compressor flows in, the inflowing gas refrigerant is condensed into the liquid refrigerant by cooling the inflowing gas refrigerant with outside air supplied by the fan. The receiver extracts the liquid refrigerant by removing water from the refrigerant condensed by the condenser or separating the gas remaining in the inflowing refrigerant.

The evaporation unit 84 includes an evaporator, a fan, an electronic expansion valve, and a pipe that connects the evaporator and the electronic expansion valve. The electronic expansion valve is connected to the receiver of the condensation unit 83 through the pipe, and the liquid refrigerant extracted by the receiver is injected to reduce the pressure and vaporize the refrigerant. An opening degree of the electronic expansion valve is adjusted in response to the control signal received from the control device body 31. The evaporator cools the air inside the container 13 by performing heat exchange between the refrigerant vaporized by the electronic expansion valve and the air inside the container 13 supplied by the fan. The refrigerant that has become vapor by heat exchange in the evaporator flows out to the accumulator of the compression unit 82 through the pipe.

That is, as shown by the dotted line arrow in FIG. 2, the refrigeration cycle in which the refrigerant circulates in order from the compression unit 82 to the condensation unit 83, from the condensation unit 83 to the evaporation unit 84, and from the evaporation unit 84 to the compression unit 82 is configured by the compression unit 82, the condensation unit 83, and the evaporation unit 84.

Various sensors such as a temperature sensor and a pressure sensor are attached to the compression unit 82, the condensation unit 83, and the evaporation unit 84, and these sensors output measurement data obtained by measurement to the control device body 31.

The following power is applied as direct current low-voltage power required in electric equipment such as the control device 30 of the refrigeration system 20 for a vehicle, the communication device 50, a motor that drives the fan of the condensation unit 83 and the evaporation unit 84, the electronic valve of the condensation unit 83, the electronic expansion valve of the evaporation unit 84, and the sensor attached to the compression unit 82, the condensation unit 83, and the evaporation unit 84. Here, the low voltage is, for example, a voltage of 12 V or 24 V.

For example, the direct current low-voltage power may be applied as power supplied by a lead storage battery that is provided in the vehicle body 10 and that supplies power to a lamp or the like of the vehicle body 10. In addition, the power conversion unit 81 may include a step-down converter, and the direct current low-voltage power obtained by stepping down the direct current high-voltage power supplied from the power supply device 500 by the step-down converter may be applied as the direct current low-voltage power. The control device 30 and the communication device 50 are directly supplied with power from the lead storage battery or the step-down converter, but the electric equipment provided in the refrigeration device 40 is supplied with power from the lead storage battery or the step-down converter via the control device body 31.

### (Configuration of Control Device)

In the control device 30, the control device body 31 includes a control circuit 71 and a communication circuit 72. The control circuit 71 and the communication circuit 72 may be constructed on the same printed substrate, or may be constructed on different printed substrates.

For example, in a case where the control circuit 71 receives a set temperature set by the driver operating the cabin controller 32 from the cabin controller 32 via the communication circuit 72, the control circuit 71 controls the operation of the refrigeration device 40 such that the temperature inside the container 13 approaches the set temperature. Specifically, the control circuit 71 generates a control signal such that the temperature inside the container 13 approaches the set temperature based on the measurement data acquired from the refrigeration device 40, and outputs the generated control signal to the inverter of the power conversion unit 81, the electronic valve of the condensation unit 83, the electronic expansion valve of the evaporation unit 84, and the like. The control circuit 71 determines a rotation speed of a motor of the fan of the condensation unit 83 and the evaporation unit 84 such that the temperature inside the container 13 approaches the set temperature based on the measurement data acquired from the refrigeration device 40, and supplies the low-voltage power corresponding to the determined rotation speed to the motor of the fan of the condensation unit 83 and the evaporation unit 84.

In a case where the control circuit 71 receives a signal from the power supply device 500 via the communication circuit 72, the control circuit 71 performs supply control of power supplied from the power supply device 500 to the refrigeration device 40, for example, control of starting or stopping the operation of the refrigeration device 40 or reducing the power consumption, in accordance with information indicated by the received signal. The control circuit 71 determines whether or not the refrigeration device 40 is operating and whether or not the refrigeration device 40 is stopped as the operation state of the refrigeration device 40 based on the measurement data acquired from the refrigeration device 40.

The communication circuit 72 includes a substrate connector 73 and a substrate connector 74. For example, two communication connection terminals 101A and 101B, two digital output terminals 111 and 112, and three digital input terminals 121, 122, and 123 are provided in the substrate connector 73. A connection terminal 130 used for connection to the cabin controller 32 is provided in the substrate connector 74, and a connection line connected to the cabin controller 32 is connected to the connection terminal 130.

The communication connection terminal 101A is a communication interface of a controller area network (CAN) communication method that is widely used as a communication method of a control signal transmitted and received between devices in the vehicle. A circuit that performs processing related to the control signal for the CAN communication method including the communication connection terminal 101A will be referred to as a main connection circuit 100A hereinafter.

The communication connection terminal 101B is a communication interface of a recommended standard 232 version C (RS232C) communication method that is widely used as a communication method of a control signal transmitted and received between a personal computer and peripheral devices. A circuit that performs processing related to the control signal for the RS232C communication method including the communication connection terminal 101B will be referred to as a main connection circuit 100B hereinafter.

The two digital output terminals 111 and 112 output, for example, a digital signal indicating the operation state of the refrigeration device 40 by a binary digital value of High and Low. In a case where the control circuit 71 determines that the refrigeration device 40 is operating, the digital output terminal 111 outputs a High digital signal, and the digital output terminal 112 outputs a Low digital signal. In a case where the control circuit 71 determines that the refrigeration device 40 is stopped, the digital output terminal 111 outputs a Low digital signal, and the digital output terminal 112 outputs a High digital signal. In a case where the operation state of the refrigeration device 40 does not correspond to any of the states of operating or stopped by the determination of the control circuit 71, the digital output terminals 111 and 112 output a Low digital signal.

The three digital input terminals 121, 122, and 123 receive, for example, a digital signal for designating the operation state of the refrigeration device 40 by a binary digital value of High and Low. The digital input terminal 121 receives, for example, a digital signal that is High in a case of designating the operation permission of the refrigeration device 40 and is Low in a case of not designating the operation permission. The digital input terminal 122 receives, for example, a digital signal that is High in a case of designating the stop of the operation of the refrigeration device 40 and is Low in a case of not designating the stop of the operation. The digital input terminal 123 receives, for example, a digital signal that is High in a case of designating the reduction of the power consumption of the refrigeration device 40 and is Low in a case of not designating the reduction of the power consumption.

A circuit that includes the digital output terminals 111 and 112 and the digital input terminals 121, 122, and 123 and that performs processing related to the digital signal input and output by the digital output terminals 111 and 112 and the digital input terminals 121, 122, and 123 will be referred to as an auxiliary connection circuit 110 hereinafter.

Meanwhile, in order to perform processing corresponding to each of the signals of the control signal for the CAN communication method transmitted and received in the main connection circuit 100A, the control signal for the RS232C communication method transmitted and received in the main connection circuit 100B, and the digital signal input and output in the auxiliary connection circuit 110, communication software corresponding to each of the signals is required. Here, the processing corresponding to each of the signals is, for example, processing of generating a signal to be transmitted or specifying information indicated by the received signal.

Programs of these pieces of communication software are created in advance and are written, for example, in a read only memory (ROM) of a microcontroller (hereinafter, referred to as a microcontroller) (not shown) provided in the control circuit 71. In a case where the control device body 31 is activated, the program of the communication software stored in the ROM of the microcontroller is loaded into a random access memory (RAM) of the microcontroller, and a central processing unit (CPU) of the microcontroller performs processing corresponding to each of the control signal and the digital signal in accordance with the program loaded into the RAM.

The cabin controller 32 includes a connection line connected to the connection terminal 130 and a communication connection terminal 140 for the RS232C communication method. The communication device 50 includes a communication connection terminal 51 for the RS232C communication method. The communication connection terminal 140 and the communication connection terminal 51 are connected by a communication connection line for the RS232C communication method.

### (Case where Power Supply Device Includes Communication Connection Terminal for CAN Communication Method)

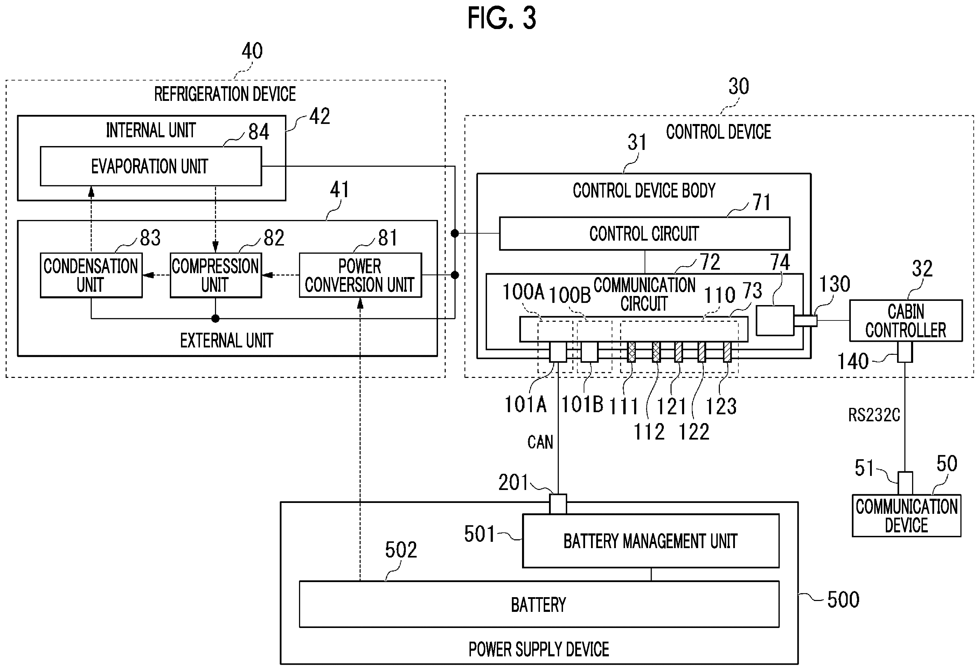

FIG. 3 is a block diagram showing a connection configuration of the refrigeration system 20 for a vehicle and the power supply device 500 in a case where the power supply device 500 includes a communication connection terminal 201 for the CAN communication method. The power supply device 500 includes a battery management unit 501 and a battery 502. The battery 502 is, for example, a lithium ion battery, is connected to the power conversion unit 81 of the refrigeration device 40, and supplies the power conversion unit 81 with direct current high-voltage power.

The battery management unit 501 is a so-called battery management system, and manages the discharging and the charging of the battery 502. The communication connection terminal 201 of the battery management unit 501 and the communication connection terminal 101A of the main connection circuit 100A of the control device body 31 are connected by a communication connection line for the CAN communication method. As a result, the control signal for the CAN communication method related to the supply control of the power via the main connection circuit 100A can be transmitted and received between the control circuit 71 and the battery management unit 501. The control signal for the CAN communication method includes at least data indicating the operation state of the refrigeration device 40 and data for designating the operation state of the refrigeration device 40.

### (Example of Supply Control of Power by Control Device)

For example, in a case where the control circuit 71 determines that the refrigeration device 40 is in an operating state based on the measurement data acquired from the refrigeration device 40, the control circuit 71 generates a control signal including data indicating that the refrigeration device 40 is operating. The control circuit 71 transmits the generated control signal to the power supply device 500 via the main connection circuit 100A.

In a case where the battery management unit 501 receives the control signal including the data indicating that the refrigeration device 40 is operating via the communication connection terminal 201, the battery management unit 501 detects the state of the battery 502. In a case where the battery management unit 501 detects that the amount of power accumulated in the battery 502 is sufficient and there is no abnormality in the battery 502, the battery management unit 501 generates a control signal including data for designating the operation permission of the refrigeration device 40. The battery management unit 501 transmits the generated control signal to the control device body 31 via the communication connection terminal 201. In a case where the control circuit 71 receives the control signal including the data for designating the operation permission of the refrigeration device 40 via the main connection circuit 100A, for example, the control circuit 71 continues the control of bringing the temperature inside the container 13 close to the set temperature based on the measurement data acquired from the refrigeration device 40.

In the detection of the state of the battery 502, it is assumed that the battery management unit 501 detects that there is an abnormality in the battery 502. In this case, the battery management unit 501 generates, for example, a control signal including data for designating the stop of the operation of the refrigeration device 40. The battery management unit 501 transmits the generated control signal to the control device body 31 via the communication connection terminal 201. In a case where the control circuit 71 receives the control signal including the data for designating the stop of the operation of the refrigeration device 40 via the main connection circuit 100A, the control circuit 71 performs control of stopping the refrigeration device 40.

In the detection of the state of the battery 502, it is assumed that the battery management unit 501 detects that the amount of power accumulated in the battery 502 is not sufficient. In this case, the battery management unit 501 generates, for example, a control signal including data for designating the reduction of the power consumption of the refrigeration device 40. The battery management unit 501 transmits the generated control signal to the control device body 31 via the communication connection terminal 201. In a case where the control circuit 71 receives the control signal including the data for designating the reduction of the power consumption of the refrigeration device 40 via the main connection circuit 100A, for example, the control circuit 71 performs control of causing the inverter of the power conversion unit 81 to generate three-phase alternating current power having a decreased frequency. As a result, the rotation speed of the electric compressor of the compression unit 82 is decreased, and the power consumed by the refrigeration device 40 is decreased.

For example, it is assumed that an abnormality occurs in the refrigeration device 40, and the control circuit 71 determines that the refrigeration device 40 is in a stopped state based on the measurement data acquired from the refrigeration device 40. In this case, the control circuit 71 generates a control signal including data indicating that the refrigeration device 40 is stopped. The control circuit 71 transmits the generated control signal to the power supply device 500 via the main connection circuit 100A. In a case where the battery management unit 501 receives the control signal including the data indicating that the refrigeration device 40 is stopped via the communication connection terminal 201, for example, the battery management unit 501 performs control of stopping the power supply to the power conversion unit 81 to the battery 502.

The above-described processing is an example of processing of the supply control of the power supplied from the power supply device 500 to the refrigeration device 40 by the control device 30, and the control device body 31 and the power supply device 500 may perform processing of the control of the power supply different from the above-described processing.

### (Case where Power Supply Device Includes Communication Connection Terminal for RS232C Communication Method)

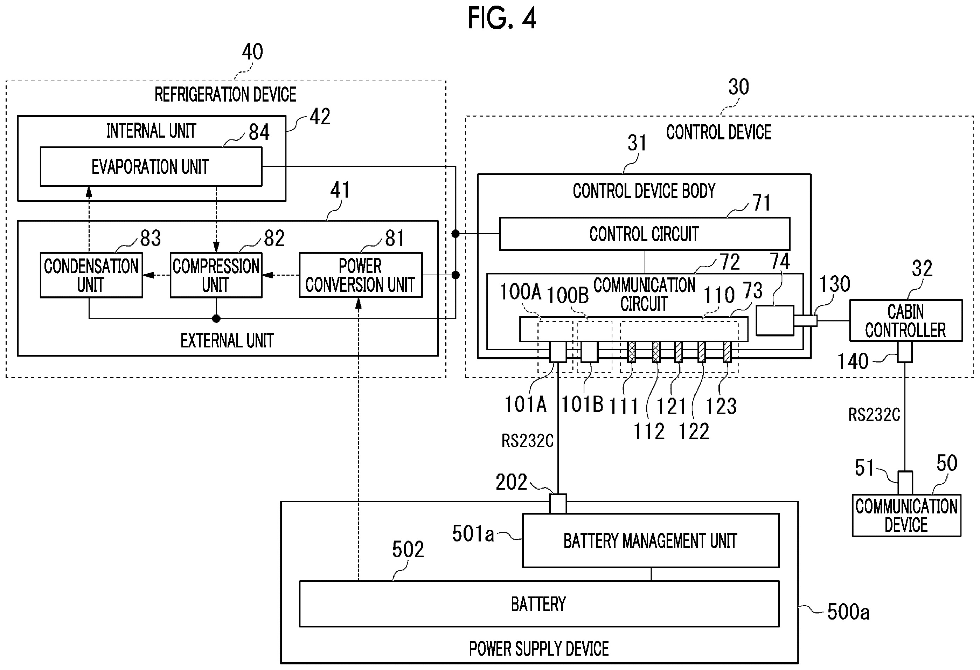

It is assumed that the vehicle body 10 includes a power supply device 500a having a communication connection terminal 202 for the RS232C communication method shown in FIG. 4 instead of the power supply device 500. Hereinafter, the vehicle body including the power supply device 500a instead of the power supply device 500 will be referred to as a vehicle body 10a, the refrigeration vehicle including the vehicle body 10a instead of the vehicle body 10 will be referred to as a refrigeration vehicle 4a, and the refrigeration vehicle remote monitoring system including the refrigeration vehicle 4a instead of the refrigeration vehicle 4 will be referred to as a refrigeration vehicle remote monitoring system 1a.

The power supply device 500a includes a battery management unit 501a and a battery 502. As in the case of the power supply device 500, the battery 502 is connected to the power conversion unit 81 of the refrigeration device 40.

A configuration of the battery management unit 501a is a configuration in which the communication connection terminal 202 for the RS232C communication method is provided instead of the communication connection terminal 201 for the CAN communication method in the configuration of the battery management unit 501. The communication connection terminal 202 of the battery management unit 501a and the communication connection terminal 101B of the main connection circuit 100B of the control device body 31 are connected by a communication connection line for the RS232C communication method. As a result, the control signal for the RS232C communication method related to the supply control of the power via the main connection circuit 100B can be transmitted and received between the control circuit 71 and the battery management unit 501. The control signal for the RS232C communication method includes at least data indicating the operation state of the refrigeration device 40 and data for designating the operation state of the refrigeration device 40. Therefore, in a case of the power supply device 500a, the same control as the example of the supply control of the power supplied from the power supply device 500 to the refrigeration device 40 by the control device 30 can be performed between the control device body 31 and the power supply device 500a.

### (Case where Power Supply Device Includes Digital Input Terminal and Digital Output Terminal)

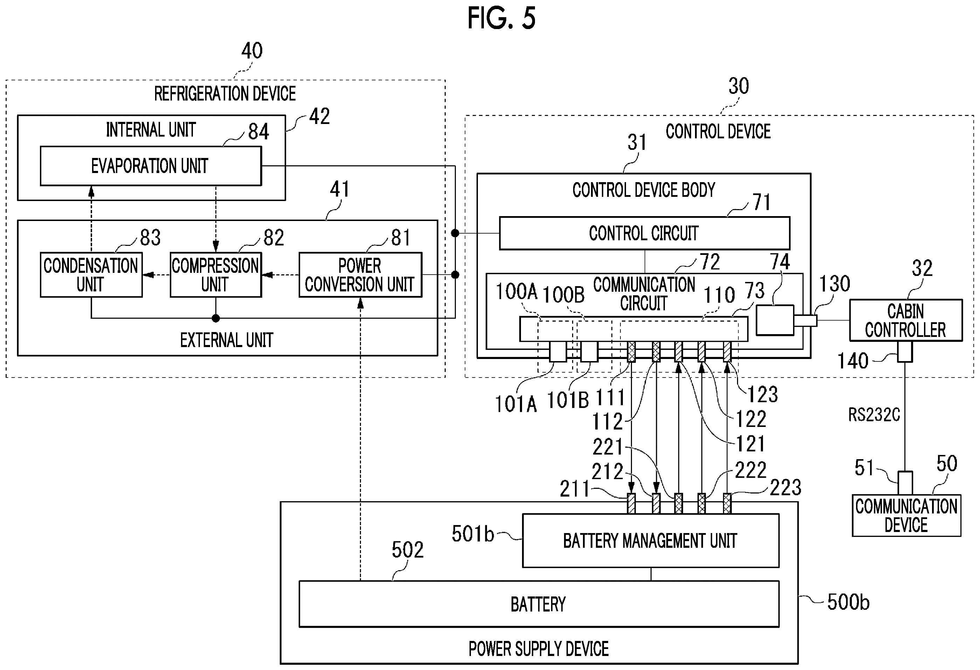

It is assumed that the vehicle body 10 includes a power supply device 500b having digital input terminals 211 and 212 and digital output terminals 221, 222, and 223 shown in FIG. 5 instead of the power supply device 500. Hereinafter, the vehicle body including the power supply device 500b instead of the power supply device 500 will be referred to as a vehicle body 10b, the refrigeration vehicle including the vehicle body 10b instead of the vehicle body 10 will be referred to as a refrigeration vehicle 4b, and the refrigeration vehicle remote monitoring system including the refrigeration vehicle 4b instead of the refrigeration vehicle 4 will be referred to as a refrigeration vehicle remote monitoring system 1b.

The power supply device 500a includes a battery management unit 501a and a battery 502. As in the case of the power supply device 500, the battery 502 is connected to the power conversion unit 81 of the refrigeration device 40.

A configuration of the battery management unit 501a is a configuration in which the digital input terminals 211 and 212 and the digital output terminals 221, 222, and 223 are provided instead of the communication connection terminal 201 for the CAN communication method in the configuration of the battery management unit 501. In the auxiliary connection circuit 110 and the battery management unit 501b, between the digital output terminal 111 and the digital input terminal 211, between the digital output terminal 112 and the digital input terminal 212, between the digital input terminal 121 and the digital output terminal 221, between the digital input terminal 122 and the digital output terminal 222, and between the digital input terminal 123 and the digital output terminal 223, for example, a connection line for the digital signal is connected.

The battery management unit 501b receives a digital signal indicating the operation state of the refrigeration device 40 by a binary digital value of High and Low via the two digital input terminals 211 and 212. The battery management unit 501b receives the digital signal output from the digital output terminal 111 by the control circuit 71 via the digital input terminal 211, and determines that the refrigeration device 40 is operating in a case where the received digital signal is High. The battery management unit 501b receives the digital signal output from the digital output terminal 112 by the control circuit 71 via the digital input terminal 212, and determines that the refrigeration device 40 is stopped in a case where the received digital signal is High.

The battery management unit 501b outputs a digital signal for designating the operation state of the refrigeration device 40 by a binary digital value of High and Low via the three digital output terminals 221, 222, and 223. In a case of designating the operation permission of the refrigeration device 40, the battery management unit 501b outputs a High digital signal from the digital output terminal 221 and outputs a Low digital signal from the digital output terminals 222 and 223. In a case of designating the stop of the operation of the refrigeration device 40, the battery management unit 501b outputs a High digital signal from the digital output terminal 222 and outputs a Low digital signal from the digital output terminals 221 and 223. In a case of designating the reduction of the power consumption of the refrigeration device 40, the battery management unit 501b outputs a High digital signal from the digital output terminal 223 and outputs a Low digital signal from the digital output terminals 221 and 222. In a case where none of the designation of the operation permission, the designation of the stop of the operation, and the designation of the reduction of the power consumption is performed, the battery management unit 501b outputs a Low digital signal from the digital output terminals 221, 222, and 223.

In the power supply devices 500 and 500a and the power supply device 500b, there is a difference in whether the signal transmitted and received with the control device body 31 is the control signal or the digital signal represented by the two values. However, the power supply devices 500 and 500a and the power supply device 500b are common in that the control device body 31 outputs the data indicating the operation state of the refrigeration device 40 to the power supply device 500b, and the power supply device 500b outputs the data for designating the operation state of the refrigeration device 40 to the control device body 31. Therefore, in a case of the power supply device 500b, the same control as the example of the supply control of the power supplied from the power supply device 500 to the refrigeration device 40 by the control device 30 can be performed between the control device body 31 and the power supply device 500b.

### (Actions and Effects of First Embodiment)

The control device body 31 provided in the control device 30 of the first embodiment includes, in the communication circuit 72, the main connection circuit 100A having the communication connection terminal 101A for the CAN communication method, the main connection circuit 100B having the communication connection terminal 101B for the RS232C communication method, and the auxiliary connection circuit 110 having the digital output terminals 111 and 112 and the digital input terminals 121, 122, and 123.

The CAN communication method and the RS232C communication method are communication methods that are generally widely used, and there are many power supply devices such as the power supply devices 500 and 500a. Here, in a case where the CAN communication method and the RS232C communication method are referred to as predetermined communication methods, the control device body 31 can connect the battery management units 501 and 501a having the communication connection terminals 201 and 202 for the predetermined communication method, such as the power supply devices 500 and 500a, via the main connection circuits 100A and 100B to transmit and receive the control signal. A scale of the communication software corresponding to these control signals is a fixed scale determined by the CAN communication method and the RS232C communication method.

On the other hand, it is also known that there is a power supply device that does not include the communication connection terminals 201 and 202 for the predetermined communication method, such as the power supply device 500b, and that can handle a general-purpose digital signal such as a digital signal indicating the operation state of a device connected to the battery 502 and a digital signal for designating the operation state of a device connected to the battery 502. For such a power supply device 500b, the control device body 31 can connect the digital output terminals 111 and 112 and the digital input terminals 121, 122, and 123 of the auxiliary connection circuit 110 to perform input and output of the digital signal.

Since information that can be transmitted by the digital signal depends on the number of terminals, many terminals are required in order to transmit a large amount of information, such as the control signal for the predetermined communication method. However, by setting the number of terminals to be able to transmit only the minimum amount of information required for controlling the device connected to the battery 502, an increase in the size of the communication circuit 72 can be suppressed, and an increase in the scale of the communication software that performs processing corresponding to each of the digital signals input and output in the auxiliary connection circuit 110 can be suppressed.

In the control device 30 of the first embodiment, the information indicating the operation state of the refrigeration device 40 and the information for designating the operation state of the refrigeration device 40 are selected as the minimum necessary information, and the number of terminals of the digital signal required for transmitting these pieces of information is limited to five. Therefore, the control device 30 of the first embodiment can be used as a power supply in a case of refrigerating a large number of types of power supply devices 500, 500a, and 500b while suppressing an increase in the size of the communication circuit 72 and the scale of the communication software.

In addition, since the refrigeration system 20 for a vehicle improves the selectivity of the power supply devices 500, 500a, and 500b that can be connected, the refrigeration system 20 for a vehicle can be attached to various types of vehicle bodies 10 regardless of whether the vehicle is driven by an engine or by an electric motor. In the refrigeration system 20 for a vehicle, improving the selectivity of the power supply devices 500 to 500b that can be connected also facilitates the power supply to the refrigeration device 40. Therefore, by using the refrigeration system 20 for a vehicle, the environmental performance of the refrigeration vehicle 4 can be improved.

In the control device 30 of the first embodiment, the main connection circuit 100A and the main connection circuit 100B are provided as the main connection circuits corresponding to the predetermined communication method. On the other hand, the RS232C communication method may be excluded from the predetermined communication method, and the control device 30 that does not include the main connection circuit 100B may be provided. In this way, the power supply device 500a cannot be connected as a connection target, but the size of the communication circuit 72 and the scale of the communication software can be further reduced.

On the contrary, the CAN communication method may be excluded from the predetermined communication method, and the control device 30 that does not include the main connection circuit 100A may be provided. In this case, in addition to obtaining the same effect as in a case where the main connection circuit 100B is not provided, the communication method of the communication connection terminal 101B of the control device body 31 and the communication connection terminal 140 of the cabin controller 32 can be unified into the same communication method, which is the RS232C communication method. In other words, the communication method in a case where the control device body 31 of the control device 30 transmits and receives the control signal to and from the power supply device 500a and the communication method in a case where the cabin controller 32 positioned as the auxiliary control unit in the control device 30 is connected to the communication device 50 can be unified, and thus the communication setting on the control device 30 side can be facilitated.

In the control device body 31 of the first embodiment, the three digital input terminals 121, 122, and 123 are provided, but the digital input terminal 123 may not be provided unless the digital signal for designating the reduction of the power consumption of the refrigeration device 40 received at the digital input terminal 123 is essential in the control of the refrigeration device 40. As a result, the size of the communication circuit 72 and the scale of the communication software can be further reduced.

In the above description, both the CAN communication method and the RS232C communication method or any one of the CAN communication method and the RS232C communication method may be used as the predetermined communication method, but any communication method may be used as the predetermined communication method as long as the size of the communication circuit 72 and the scale of the communication software are within a range of an allowable scale, and any number of communication methods may be used as the predetermined communication method such that a larger number of types of power supply devices can be used. In this case, the main connection circuit is constructed in the communication circuit 72 for each communication method included in the predetermined communication method, such as the main connection circuits 100A and 100B.

In addition, the number of the digital output terminals 111 and 112 or the number of the digital input terminals 121, 122, and 123 may be increased as long as the size of the communication circuit 72 and the scale of the communication software are within a range of an allowable scale. As a result, it is possible to exchange more information between the control circuit 71 and the battery management unit 501b.

### <Second Embodiment>

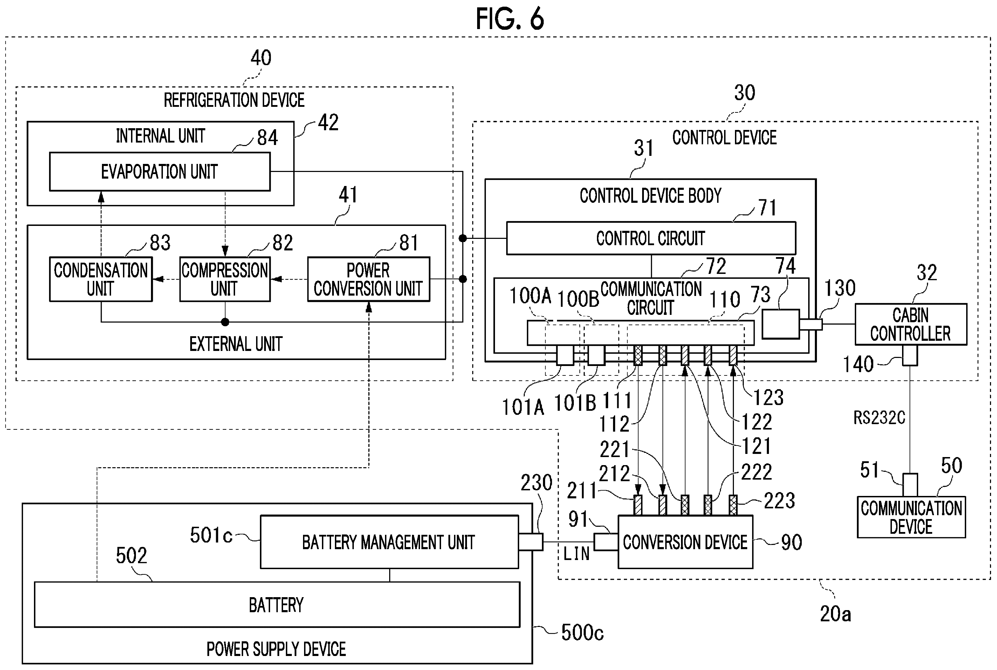

A refrigeration system 20a for a vehicle according to a second embodiment includes the same configuration as the refrigeration system 20 for a vehicle according to the first embodiment, and further includes a conversion device 90 shown in FIG. 6. In the second embodiment, the vehicle body 10 includes a power supply device 500c shown in FIG. 6 instead of the power supply device 500. Hereinafter, the vehicle body including the power supply device 500c instead of the power supply device 500 will be referred to as a vehicle body 10c, the refrigeration vehicle including the vehicle body 10c instead of the vehicle body 10 and including the refrigeration system 20a for a vehicle instead of the refrigeration system 20 for a vehicle will be referred to as a refrigeration vehicle 4c, and the refrigeration vehicle remote monitoring system including the refrigeration vehicle 4c instead of the refrigeration vehicle 4 will be referred to as a refrigeration vehicle remote monitoring system 1c.

The power supply device 500c includes a battery management unit 501c and a battery 502. As in the case of the power supply device 500, the battery 502 is connected to the power conversion unit 81 of the refrigeration device 40.

A configuration of the battery management unit 501c is a configuration in which the communication connection terminal 230 is provided instead of the communication connection terminal 201 for the CAN communication method in the configuration of the battery management unit 501. A communication method of the communication connection terminal 230 of the battery management unit 501c is a communication method different from the predetermined communication method described above. Here, as an example, it is assumed that the communication method of the communication connection terminal 230 is a local interconnect network (LIN) communication method.

In this case, since the communication circuit 72 of the control device body 31 does not include the communication connection terminal corresponding to the LIN communication method, the battery management unit 501c and the control device body 31 cannot be directly connected to each other.

Therefore, in the second embodiment, the battery management unit 501c and the control device body 31 are connected via the conversion device 90 including a communication connection terminal 91 for the LIN communication method, the digital input terminals 211 and 212, and the digital output terminals 221, 222, and 223. The communication connection terminal 91 for the LIN communication method of the conversion device 90 and the communication connection terminal 230 are connected by a communication connection line for the LIN communication method. The digital input terminals 211 and 212 and the digital output terminals 221, 222, and 223 of the conversion device 90 are connected to the digital output terminals 111 and 112 and the digital input terminals 121, 122, and 123 of the auxiliary connection circuit 110 of the communication circuit 72 in the same connection configuration as the battery management unit 501b and the auxiliary connection circuit 110 shown in FIG. 5.

In a case where the digital signal received via the digital input terminal 211 indicates High, the conversion device 90 generates a control signal for the LIN communication method including data indicating that the refrigeration device 40 is operating. In a case where the digital signal received via the digital input terminal 212 indicates High, the conversion device 90 generates a control signal for the LIN communication method including data indicating that the refrigeration device 40 is stopped. The conversion device 90 transmits the generated control signal to the battery management unit 501c via the communication connection terminal 91 for the LIN communication method.

In a case where the conversion device 90 receives the control signal for the LIN communication method output from the communication connection terminal 230 of the battery management unit 501c via the communication connection terminal 91, the conversion device 90 performs the following processing in accordance with the data included in the received control signal. In a case where the data included in the control signal indicates the designation of the operation permission of the refrigeration device 40, the conversion device 90 outputs a High digital signal from the digital output terminal 221 and outputs a Low digital signal from the digital output terminals 222 and 223. In a case where the data included in the control signal indicates the designation of the stop of the operation of the refrigeration device 40, the conversion device 90 outputs a High digital signal from the digital output terminal 222 and outputs a Low digital signal from the digital output terminals 221 and 223. In a case where the data included in the control signal indicates the designation of the reduction of the power consumption of the refrigeration device 40, the conversion device 90 outputs a High digital signal from the digital output terminal 223 and outputs a Low digital signal from the digital output terminals 221 and 222.

In a case where the data included in the control signal does not correspond to any of the designation of the operation permission of the refrigeration device 40, the designation of the stop of the operation of the refrigeration device 40, and the designation of the reduction of the power consumption of the refrigeration device 40, the conversion device 90 outputs a Low digital signal from the digital output terminals 221, 222, and 223.

The conversion device 90 cannot relay all the information transmitted and received between each of the battery management units 501 and 501a shown in FIGS. 3 and 4 and the control circuit 71 by the control signal, but can relay the information input and output between the battery management unit 501b shown in FIG. 5 and the control circuit 71 by the digital signal. Therefore, in a case of the power supply device 500c, the same control as the example of the supply control of the power supplied from the power supply device 500 to the refrigeration device 40 by the control device 30 described in the first embodiment can be performed between the control device body 31 and the power supply device 500c.

### <Third Embodiment>

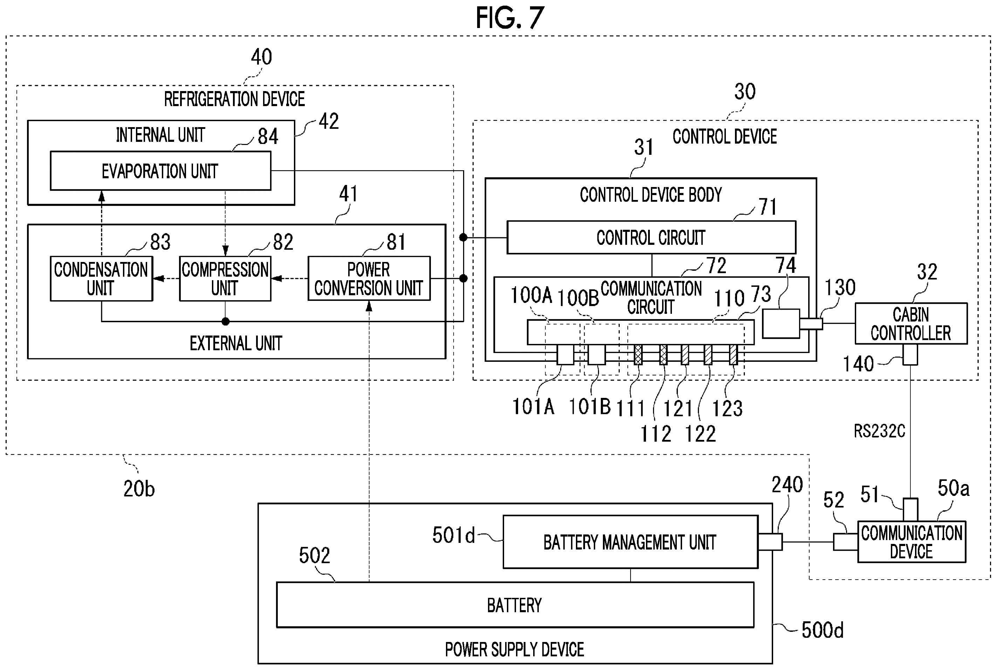

A configuration of a refrigeration system 20b for a vehicle according to a third embodiment is a configuration in which the communication device 50 is replaced with a communication device 50a in the configuration of the refrigeration system 20 for a vehicle according to the first embodiment, as shown in FIG. 7. In the third embodiment, the vehicle body 10 includes a power supply device 500d shown in FIG. 7 instead of the power supply device 500. Hereinafter, the vehicle body including the power supply device 500d instead of the power supply device 500 will be referred to as a vehicle body 10d, the refrigeration vehicle including the vehicle body 10d instead of the vehicle body 10 and including the refrigeration system 20b for a vehicle instead of the refrigeration system 20 for a vehicle will be referred to as a refrigeration vehicle 4d, and the refrigeration vehicle remote monitoring system including the refrigeration vehicle 4d instead of the refrigeration vehicle 4 will be referred to as a refrigeration vehicle remote monitoring system 1d.

The communication device 50a includes a communication connection terminal 52 for a specific communication method used for connection to a battery management unit 501d, in addition to the communication connection terminal 51.

The power supply device 500d includes a battery management unit 501d and a battery 502. As in the case of the power supply device 500, the battery 502 is connected to the power conversion unit 81 of the refrigeration device 40.

A configuration of the battery management unit 501d is a configuration in which the communication connection terminal 240 for the same communication method as the communication connection terminal 52 of the communication device 50a is provided instead of the communication connection terminal 201 for the CAN communication method in the configuration of the battery management unit 501. The communication connection terminal 240 and the communication connection terminal 52 are connected by a communication connection line for the communication method common to the communication connection terminal 240 and the communication connection terminal 52.

### (Case where Transfer is Performed in Communication Device)

In the communication device 50a, for example, it is assumed that a setting is made to transfer the control signal as follows in a case where the control signal to which specific identification information determined in advance is attached is received at the communication connection terminals 51 and 52. That is, in a case where the control signal to which the specific identification information is attached is received at the communication connection terminal 51, the received control signal is transmitted from the communication connection terminal 52. It is assumed that the communication device 50a is set to a transfer setting of transmitting the received control signal from the communication connection terminal 51 in a case where the control signal to which the specific identification information is attached is received at the communication connection terminal 52.

In this case, in a case where the control circuit 71 generates the control signal to be transmitted to the battery management unit 501d, the control circuit 71 generates the control signal, attaches the specific identification information to the generated control signal, and outputs the generated control signal to the cabin controller 32 via the communication circuit 72. In a case where the cabin controller 32 receives the control signal to which the specific identification information is attached, the cabin controller 32 transmits the received control signal to the communication device 50a. In a case where the communication device 50a receives the control signal to which the specific identification information transmitted from the cabin controller 32 is attached at the communication connection terminal 51, the communication device 50a transmits the received control signal from the communication connection terminal 52. The battery management unit 501d receives the control signal transmitted from the communication device 50a at the communication connection terminal 240. As a result, the battery management unit 501d can acquire the control signal from the control circuit 71.

In a case where the battery management unit 501d transmits the control signal to the control circuit 71, the control signal is transmitted via a path opposite to the path in a case where the control circuit 71 transmits the control signal to the battery management unit 501d.

### (Case where Transfer is Performed via Remote Monitoring Device)

As described above, the remote monitoring device 3, instead of the communication device 50a, may relay the control signal transmitted and received between the control circuit 71 and the battery management unit 501d. In this case, for example, the control signal is transmitted in the following procedure. The control circuit 71 transmits the control signal to the communication device 50a via the communication circuit 72 and the cabin controller 32. In a case where the communication device 50a receives the control signal via the communication connection terminal 51, the communication device 50a generates transmission data including the received control signal, the transmission data having the identification information of the control device 30 as a transmission source and the identification information of the remote monitoring device 3 as a transmission destination.

The communication device 50a transmits the generated transmission data to the communication network 2 to which the remote monitoring device 3 is connected. The communication network 2 transfers the transmission data to the remote monitoring device 3 in accordance with the identification information of the transmission destination of the transmitted transmission data. The remote monitoring device 3 receives the transmission data via the communication network 2.

For example, a path table in which the identification information of the control device 30 and the identification information of the power supply device 500d that supplies power to the refrigeration device 40, which is the control target of the control device 30, are associated with each other is stored in advance in a storage area inside the remote monitoring device 3. The remote monitoring device 3 detects the identification information of the power supply device 500d associated with the identification information of the control device 30 based on the identification information of the control device 30 indicated as the transmission source in the received transmission data and the path table.

The remote monitoring device 3 rewrites the transmission source of the received transmission data to the identification information of the remote monitoring device 3 and rewrites the transmission destination to the identification information of the power supply device 500d, and then transmits the transmission data to the communication network 2. The communication network 2 transfers the transmission data to the communication device 50a in accordance with the identification information of the transmission destination of the transmitted transmission data. The communication device 50a receives the transmission data via the communication network 2.

The communication device 50a transmits the control signal included in the received transmission data from the communication connection terminal 52 in accordance with the identification information of the power supply device 500d, which is the transmission destination of the received transmission data. The battery management unit 501d receives the control signal transmitted from the communication device 50a at the communication connection terminal 240. As a result, the battery management unit 501d can acquire the control signal from the control circuit 71.

In a case where the battery management unit 501d transmits the control signal to the control circuit 71, the control signal is transmitted via a path opposite to the path in a case where the control circuit 71 transmits the control signal to the battery management unit 501d.

Therefore, the control signal related to the supply control of the power can be transmitted and received between the control circuit 71 and the battery management unit 501d via the communication device 50a or the remote monitoring device 3. The control signal includes at least data indicating the operation state of the refrigeration device 40 and data for designating the operation state of the refrigeration device 40. Therefore, in a case of the power supply device 500d, the same control as the example of the supply control of the power supplied from the power supply device 500 to the refrigeration device 40 by the control device 30 described in the first embodiment can be performed between the control device body 31 and the power supply device 500d.

The specific communication method that is the communication method of the communication connection terminal 52 provided in the communication device 50a and the communication connection terminal 240 provided in the battery management unit 501d may be the CAN communication method, the RS232C communication method, or a communication method different from the CAN communication method and the RS232C communication method.

### (Actions and Effects of Second and Third Embodiments)

As described above, in the refrigeration systems 20a and 20b for vehicles according to the second and third embodiments, even in the power supply devices 500c and 500d that do not include the communication connection terminals 201 and 202 for the predetermined communication method, the digital input terminals 211 and 212, and the digital output terminals 221, 222, and 223, the control signal can be transmitted and received with the control device 30 by using the conversion device 90 and the communication device 50a. As a result, in the refrigeration systems 20a and 20b for vehicles according to the second and third embodiments, a larger number of types of power supply devices 500, 500a, 500b, 500c, and 500d and the control device 30 can be connected than in the refrigeration system 20 for a vehicle according to the first embodiment. That is, also in the second and third embodiments, the control device 30 can be used as a power supply in a case of refrigerating a large number of types of power supply devices 500, 500a, 500b, 500c, and 500d while suppressing an increase in the size of the communication circuit 72 and the scale of the communication software.

### <Fourth Embodiment>

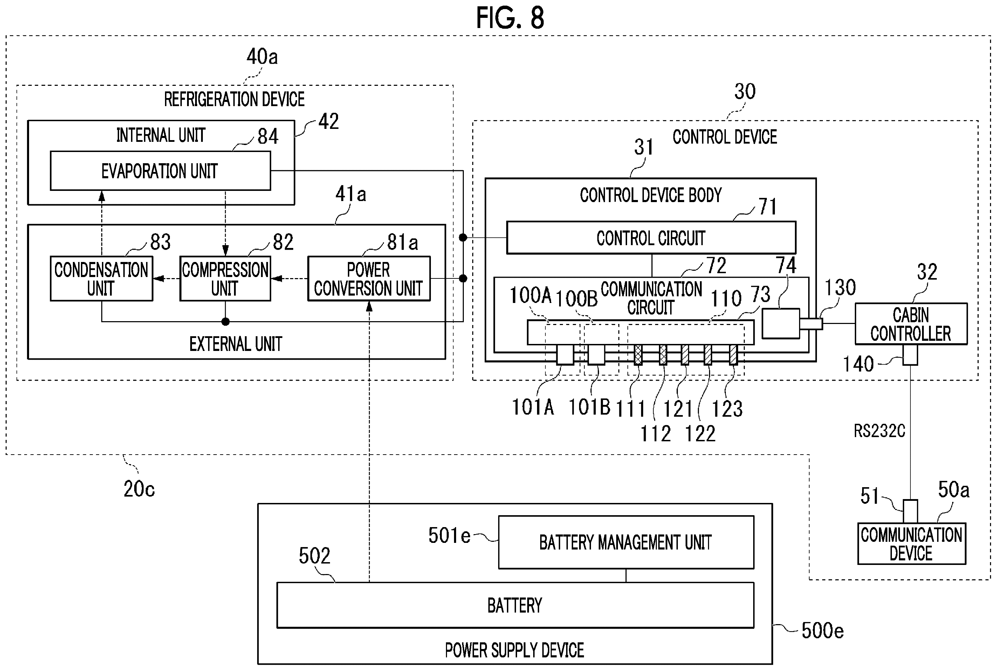

A configuration of a refrigeration system 20c for a vehicle according to a fourth embodiment is a configuration in which the refrigeration device 40 is replaced with a refrigeration device 40a in the configuration of the refrigeration system 20 for a vehicle according to the first embodiment, as shown in FIG. 8. In the fourth embodiment, the vehicle body 10 includes a power supply device 500e shown in FIG. 8 instead of the power supply device 500. Hereinafter, the vehicle body including the power supply device 500e instead of the power supply device 500 will be referred to as a vehicle body 10e, the refrigeration vehicle including the vehicle body 10e instead of the vehicle body 10 and including the refrigeration system 20c for a vehicle instead of the refrigeration system 20 for a vehicle will be referred to as a refrigeration vehicle 4e, and the refrigeration vehicle remote monitoring system including the refrigeration vehicle 4e instead of the refrigeration vehicle 4 will be referred to as a refrigeration vehicle remote monitoring system 1e.

The power supply device 500e includes a battery management unit 501e and a battery 502. As in the case of the power supply device 500, the battery 502 is connected to the power conversion unit 81 of the refrigeration device 40. The battery management unit 501e manages the discharging and the charging of the battery 502 as in the battery management unit 501 according to the first embodiment, but does not include the communication connection terminals 201, 202, 230, and 240 and the digital input terminals 211 and 212, and the digital output terminals 221, 222, and 223 shown in the first to third embodiments. Therefore, since the battery management unit 501d and the control circuit 71 cannot transmit and receive the control signal or input and output the digital signal, the supply control of the power supplied from the power supply device 500e to the refrigeration device 40 cannot be performed.

In the refrigeration system 20c for a vehicle, the refrigeration device 40a includes an external unit 41a and an internal unit 42. A configuration of the external unit 41a is a configuration in which the power conversion unit 81 is replaced with a power conversion unit 81a in the configuration of the external unit 41 according to the first embodiment. The power conversion unit 81a includes an inverter as in the power conversion unit 81 according to the first embodiment. However, the inverter of the power conversion unit 81a operates as follows, which is different from the inverter of the power conversion unit 81. In a case where the inverter of the power conversion unit 81a receives the control signal from the control device body 31, the inverter converts the high-voltage direct current power supplied from the battery 502 of the power supply device 500e into three-phase alternating current power having a frequency corresponding to the control signal and supplies the three-phase alternating current power to the compression unit 82, as in the inverter of the power conversion unit 81.

In a case where the inverter of the power conversion unit 81 according to the first embodiment does not receive the control signal from the control device body 31, the inverter does not convert the high-voltage direct current power supplied from the battery 502 of the power supply device 500e into the three-phase alternating current power. On the other hand, in a case where the inverter of the power conversion unit 81a according to the fourth embodiment detects that the power is supplied from the battery 502 of the power supply device 500e even in a case where the control signal is not received from the control device body 31, the inverter converts the power into the three-phase alternating current power having a predetermined frequency and supplies the three-phase alternating current power to the compression unit 82.

Therefore, in the fourth embodiment, although the supply control of the power supplied from the power supply device 500e to the refrigeration device 40 cannot be performed, the refrigeration device 40a can operate the refrigeration cycle as long as the power is supplied from the battery 502 of the power supply device 500e.

### (Actions and Effects of Fourth Embodiment)

As described above, in a case where the power conversion unit 81a of the external unit 41a of the refrigeration device 40a provided in the refrigeration system 20c for a vehicle according to the fourth embodiment detects that the power is supplied from the battery 502 even in a case where the control signal is not received from the control device body 31, the power conversion unit 81a converts the power into the three-phase alternating current power having a predetermined frequency and supplies the three-phase alternating current power to the compression unit 82. Therefore, even in a case of a power supply device that does not include the communication connection terminals 201, 202, 230, and 240, the digital input terminals 211 and 212, and the digital output terminals 221, 222, and 223 as in the power supply device 500e, the refrigeration device 40a can start the operation alone. Therefore, also in the fourth embodiment, the control device 30 can be used as a power supply in a case of refrigerating a large number of types of power supply devices 500, 500a, 500b, and 500e while suppressing an increase in the size of the communication circuit 72 and the scale of the communication software.

### (Other Configuration Example of Embodiment)

The embodiments of the present disclosure have been described in detail above with reference to the drawings. However, the specific configuration is not limited to the embodiments, but includes designs and the like without departing from the gist of the present disclosure.

### (Other Configuration Example Related to Control Device Body)

In the refrigeration systems 20 to 20c for vehicles according to the first to fourth embodiments, for example, as shown in FIG. 1, the refrigeration devices 40 and 40a and the control device body 31 are provided to be separated from each other. In this case, by accommodating the control device body 31 in, for example, a low-voltage electrical equipment box separated from the refrigeration devices 40 and 40a, the control device body 31 can be attached to any portion including a portion close to the high-voltage portion of the vehicle bodies 10 to 10e. As a result, the connectivity with the power supply devices 500 to 500e and the communication devices 50 and 50a can be improved. In addition, in the control device body 31, by accommodating the control circuit 71 and the communication circuit 72 in the low-voltage electrical equipment box, using a separate harness that connects the communication connection terminal 101A and the communication connection terminal 101B to the communication circuit 72, respectively, and using one harness that connects the digital output terminals 111 and 112 and the digital input terminals 121, 122, and 123 to the communication circuit 72 in a lump, the connectivity with the power supply devices 500 to 500e can be further improved.

### (Other Configuration Example Related to Control via Driver of Refrigeration Vehicle)

In the first to third embodiments, the control circuit 71 directly controls the refrigeration device 40 based on the control signal or the digital signal received from the battery management units 501 to 501d and the processing incorporated therein. On the other hand, the control circuit 71 may perform the control via the driver of the refrigeration vehicles 4 to 4d instead of directly controlling the refrigeration device 40.

For example, the control circuit 71 converts the information indicated by the data included in the control signal received from the battery management units 501 to 501d or the information indicated by the digital signal into data of a sentence indicating the content of the information, and displays the converted data of the sentence on the monitor of the cabin controller 32. The driver performs, for example, an operation of transmitting a control signal indicating the next processing to be performed to the control circuit 71 on a button or the like provided in the cabin controller 32, with reference to the sentence displayed on the monitor of the cabin controller 32. As a result, in the control circuit 71, there is no need to incorporate the processing to be performed in a case where the control signal or the digital signal is received, and the processing is determined by the driver.

### (Other Configuration Example Related to Control via Operator of Remote Monitoring Device)

In the first to third embodiments, in a case where the control circuit 71 or the battery management units 501 to 501d receive the control signal or the digital signal, all of the received control signal or the digital signal may be transmitted to the remote monitoring device 3 via the communication devices 50 and 50a. In this case, the remote monitoring device 3 converts, for example, the information indicated by the data included in the control signal received from the control circuit 71 or the battery management units 501 to 501d or the information indicated by the digital signal into data of a sentence indicating the content of the information, and displays the converted data of the sentence on a monitor provided in the remote monitoring device 3. The operator performs, for example, an operation of transmitting a control signal indicating the next processing to be performed to the control circuit 71 or the battery management units 501 to 501d on a keyboard, a mouse, or the like as an input device provided in the remote monitoring device 3, with reference to the sentence displayed on the monitor of the remote monitoring device 3. As a result, in the control circuit 71 or the battery management units 501 to 501d, there is no need to incorporate the processing to be performed in a case where the control signal or the digital signal is received, and the processing is determined by the operator of the remote monitoring device 3.

The third embodiment has a configuration in which the remote monitoring device 3 relays the received control signal. On the other hand, the remote monitoring device 3 may not relay the received control signal, may convert the information indicated by the data included in the received control signal into data of a sentence indicating the content of the information, and may display the converted data of the sentence on a monitor provided in the remote monitoring device 3. In this case, the operator performs, for example, an operation of transmitting a control signal indicating the next processing to be performed to the control circuit 71 or the battery management units 501 to 501d on an input device provided in the remote monitoring device 3, with reference to the sentence displayed on the monitor of the remote monitoring device 3. As a result, the remote monitoring device 3 does not need to include the path table.

### (Other Configuration Example)

The refrigeration system 20a for a vehicle according to the second embodiment, the refrigeration system 20b for a vehicle according to the third embodiment, and the refrigeration system 20c for a vehicle according to the fourth embodiment may be optionally combined.

In the first, second, and fourth embodiments, the control device 30 includes the cabin controller 32, but the control device 30 may not include the cabin controller 32.

In the first, second, and fourth embodiments, the configuration may not include the remote monitoring, and in this case, the refrigeration systems 20, 20a, and 20c for vehicles may not include the communication device 50, and the refrigeration vehicle remote monitoring systems 1 to 1e may not include the communication network 2 and the remote monitoring device 3.

### <Additional Notes>

The control device 30 and the refrigeration systems 20 to 20c for vehicles according to the embodiment of the present disclosure are understood as follows, for example.
(1) A control device 30 according to a first aspect is provided in refrigeration systems 20a to 20c for vehicles including refrigeration devices 40 and 40a, and performs supply control of power supplied to the refrigeration devices from power supply devices 500 to 500e connected to the refrigeration devices, the control device 30 including a main connection circuit (for example, main connection circuits 100A and 100B) that includes a communication connection terminal (for example, communication connection terminals 101A and 101B) for a predetermined communication method (for example, a CAN communication method and an RS232C communication method), and that transmits and receives a control signal related to the supply control of the power via the communication connection terminal in a case where the power supply device is connected to the communication connection terminal, and an auxiliary connection circuit 110 that includes a digital output terminal (for example, digital output terminals 111 and 112) and a digital input terminal (for example, digital input terminals 121, 122, and 123), and that outputs a digital signal indicating an operation state of the refrigeration device from the digital output terminal and receives a digital signal for designating the operation state of the refrigeration device at the digital input terminal in a case where the power supply device is connected to the digital output terminal and the digital input terminal. According to the present aspect and the following aspects, the control device 30 can be used as a power supply in a case of refrigerating a large number of types of power supply devices 500 to 500e while suppressing an increase in the size of the communication circuit 72 of the control device 30 and the scale of the communication software.
(2) A control device 30 according to a second aspect is the control device according to (1), in which the auxiliary connection circuit includes first and second digital output terminals 111 and 112 and first and second digital input terminals 121 and 122, outputs a digital signal indicating that the refrigeration device is operating from the first digital output terminal, outputs a digital signal indicating that the refrigeration device is stopped from the second digital output terminal, receives a digital signal for designating an operation permission of the refrigeration device at the first digital input terminal, and receives a digital signal for designating stop of the operation of the refrigeration device at the second digital input terminal. According to the present aspect, the control device 30 can notify the power supply devices 500 to 500d whether the refrigeration device 40 is operating or stopped, and the power supply devices 500 to 500d can instruct the control device 30 to operate or stop the refrigeration device 40.
(3) A control device 30 according to a third aspect is the control device according to (2), in which the auxiliary connection circuit further includes a third digital input terminal 123 that receives a digital signal for designating a reduction in power consumption of the refrigeration device. According to the present aspect, the power supply devices 500 to 500d can instruct the control device 30 to reduce the power consumption of the refrigeration device 40.
(4) A control device 30 according to a fourth aspect is the control device according to any one of (1) to (3), in which in a case where a plurality of the predetermined communication methods are provided, the main connection circuits 100A and 100B are provided for each of the plurality of predetermined communication methods. According to the present aspect, since the number of predetermined communication methods can be adjusted as long as the size of the communication circuit 72 and the scale of the communication software are within a range of an allowable scale, the types of the power supply devices 500 to 500e that can be connected can be increased or decreased.
(5) A control device 30 according to a fifth aspect is the control device according to any one of (1) to (4), further including an auxiliary control unit (for example, a cabin controller 32) that includes the communication connection terminal for the predetermined communication method, the communication connection terminal being connected to communication devices 50 and 50a provided in the refrigeration system for a vehicle. According to the present aspect, since the communication interface of the device connected to the control device 30 can be unified into the predetermined communication method, the communication setting on the control device 30 side can be facilitated.
(6) A control device 30 according to a sixth aspect is the control device according to any one of (1) to (5), in which the control device is accommodated in a low-voltage electrical equipment box separated from the refrigeration device. According to the present aspect, the control device 30 can be attached to any portion of the vehicle bodies 10 to 10e.
(7) Refrigeration systems 20 to 20c for vehicles according to a seventh aspect includes refrigeration devices 40 and 40a and a control device 30, in which the control device includes a main connection circuit (for example, main connection circuits 100A and 100B) that includes a communication connection terminal (for example, communication connection terminals 101A and 101B) for a predetermined communication method (for example, a CAN communication method and an RS232C communication method), and that transmits and receives a control signal related to supply control of power, which is supplied to the refrigeration device from power supply devices 500 to 500e connected to the refrigeration devices, via the communication connection terminal in a case where the power supply device is connected to the communication connection terminal, and an auxiliary connection circuit 110 that includes a digital output terminal (for example, digital output terminals 111 and 112) and a digital input terminal (for example, digital input terminals 121, 122, and 123), and that outputs a digital signal indicating an operation state of the refrigeration device from the digital output terminal and receives a digital signal for designating the operation state of the refrigeration device at the digital input terminal in a case where the power supply device is connected to the digital output terminal and the digital input terminal.
(8) A refrigeration system 20a for a vehicle according to an eighth aspect is the refrigeration system for a vehicle according to (7), further including a conversion device 90 that is connected to the communication connection terminal of the power supply device 500c including the communication connection terminal 230 for a communication method different from the predetermined communication method, and the digital output terminal and the digital input terminal of the auxiliary connection circuit, converts the digital signal indicating the operation state of the refrigeration device output from the digital output terminal of the auxiliary connection circuit into a control signal for the communication method of the communication connection terminal provided in the power supply device and outputs the converted control signal to the power supply device, and in a case where data for designating the operation state of the refrigeration device is included in the control signal transmitted by the power supply device, converts the data for designating the operation state of the refrigeration device into the digital signal and outputs the converted digital signal to the digital input terminal of the auxiliary connection circuit. According to the present aspect, even in a case of the power supply device 500c that cannot be connected to the communication connection terminals 101A, 101B, the digital output terminals 111, 112, and the digital input terminals 121, 122, 123, the control signal related to the supply control of the power can be transmitted and received with the control device 30 via the conversion device 90.
(9) A refrigeration system 20b for a vehicle according to a ninth aspect is the refrigeration system for a vehicle according to (7) or (8), further including a communication device 50a, in which the power supply device and the control device are connected to the communication device, and the communication device relays the control signal related to the supply control of the power transmitted and received between the power supply device and the control device in the communication device, or the communication device is connected to a remote monitoring device 3, and the power supply device and the control device transmit and receive the control signal related to the supply control of the power via the remote monitoring device. According to the present aspect, even in a case of the power supply device 500d that cannot be connected to the communication connection terminals 101A, 101B, the digital output terminals 111, 112, and the digital input terminals 121, 122, 123, the control signal related to the supply control of the power can be transmitted and received with the control device 30 via the communication device 50a or the remote monitoring device 3.
(10) A refrigeration system 20c for a vehicle according to a tenth aspect is the refrigeration system for a vehicle according to any one of (7) to (9), in which the refrigeration device 40a performs the operation in accordance with the supply control of the power in a case where the supply control of the power by the control device is received, and in a case where the supply control of the power by the control device is not received, performs the operation by the supplied power when the power supplied from the power supply device is detected. According to the present aspect, even in a case of the power supply device 500e that cannot be connected to the communication connection terminals 101A, 101B, the digital output terminals 111, 112, and the digital input terminals 121, 122, 123, the refrigeration device 40a can use the power supply device 500e as the power supply.

### Industrial Applicability

According to each embodiment of the present disclosure, the control device can be used as a power supply in a case of refrigerating a large number of types of power supply devices while suppressing an increase in the size of the communication circuit of the control device and the scale of the communication software.

### Reference Signs List

1: refrigeration vehicle remote monitoring system
2: communication network
3: remote monitoring device
4: refrigeration vehicle
10: vehicle body
11: cabin
12: chassis
13: container
20: refrigeration system for vehicle
30: control device
31: control device body
32: cabin controller
40: refrigeration device
41: external unit
42: internal unit
50: communication device
71: control circuit
72: communication circuit
73, 74: substrate connector
81: power conversion unit
82: compression unit
83: condensation unit
84: evaporation unit
100A, 100B: main connection circuit
51, 101A, 101B, 140, 201: communication connection terminal
110: auxiliary connection circuit
111, 112: digital output terminal
121, 122, 123: digital input terminal
130: connection terminal
500: power supply device
501: battery management unit
502: battery

## Claims

1. A control device that is provided in a refrigeration system for a vehicle including a refrigeration device, and that performs supply control of power supplied to the refrigeration device from a power supply device connected to the refrigeration device, the control device comprising:
a main connection circuit that includes a communication connection terminal for a predetermined communication method, and that transmits and receives a control signal related to the supply control of the power via the communication connection terminal in a case where the power supply device is connected to the communication connection terminal; and
an auxiliary connection circuit that includes a digital output terminal and a digital input terminal, and that outputs a digital signal indicating an operation state of the refrigeration device from the digital output terminal and receives a digital signal for designating the operation state of the refrigeration device at the digital input terminal in a case where the power supply device is connected to the digital output terminal and the digital input terminal.

2. The control device according to Claim 1, wherein
the auxiliary connection circuit includes first and second digital output terminals and first and second digital input terminals, outputs a digital signal indicating that the refrigeration device is operating from the first digital output terminal, outputs a digital signal indicating that the refrigeration device is stopped from the second digital output terminal, receives a digital signal for designating an operation permission of the refrigeration device at the first digital input terminal, and receives a digital signal for designating stop of the operation of the refrigeration device at the second digital input terminal.

3. The control device according to Claim 2, wherein
the auxiliary connection circuit further includes a third digital input terminal that receives a digital signal for designating a reduction in power consumption of the refrigeration device.

4. The control device according to Claim 1, wherein
in a case where a plurality of the predetermined communication methods are provided,
the main connection circuit is provided for each of the plurality of predetermined communication methods.

5. The control device according to Claim 1, further comprising:
an auxiliary control unit that includes the communication connection terminal for the predetermined communication method, the communication connection terminal being connected to a communication device provided in the refrigeration system for a vehicle.

6. The control device according to Claim 1, wherein
the control device is accommodated in a low-voltage electrical equipment box separated from the refrigeration device.

7. A refrigeration system for a vehicle, comprising:
a refrigeration device; and
a control device, wherein
the control device includes
a main connection circuit that includes a communication connection terminal for a predetermined communication method, and that transmits and receives a control signal related to supply control of power, which is supplied to the refrigeration device from a power supply device connected to the refrigeration device, via the communication connection terminal in a case where the power supply device is connected to the communication connection terminal, and
an auxiliary connection circuit that includes a digital output terminal and a digital input terminal, and that outputs a digital signal indicating an operation state of the refrigeration device from the digital output terminal and receives a digital signal for designating the operation state of the refrigeration device at the digital input terminal in a case where the power supply device is connected to the digital output terminal and the digital input terminal.

8. The refrigeration system for a vehicle according to Claim 7, further comprising:
a conversion device that is connected to the communication connection terminal of the power supply device including the communication connection terminal for a communication method different from the predetermined communication method, and the digital output terminal and the digital input terminal of the auxiliary connection circuit, converts the digital signal indicating the operation state of the refrigeration device output from the digital output terminal of the auxiliary connection circuit into a control signal for the communication method of the communication connection terminal provided in the power supply device and outputs the converted control signal to the power supply device, and in a case where data for designating the operation state of the refrigeration device is included in the control signal transmitted by the power supply device, converts the data for designating the operation state of the refrigeration device into the digital signal and outputs the converted digital signal to the digital input terminal of the auxiliary connection circuit.

9. The refrigeration system for a vehicle according to Claim 7, further comprising:
a communication device, wherein
the power supply device and the control device are connected to the communication device, and
the communication device relays the control signal related to the supply control of the power transmitted and received between the power supply device and the control device in the communication device, or
the communication device is connected to a remote monitoring device, and the power supply device and the control device transmit and receive the control signal related to the supply control of the power via the remote monitoring device.

10. The refrigeration system for a vehicle according to Claim 7, wherein
the refrigeration device performs the operation in accordance with the supply control of the power in a case where the supply control of the power by the control device is received, and in a case where the supply control of the power by the control device is not received, performs the operation by the supplied power when the power supplied from the power supply device is detected.

11. A refrigeration vehicle comprising:
a vehicle body including a power supply device; and
a refrigeration system for a vehicle, wherein
the refrigeration system for a vehicle includes a refrigeration device that is connected to the power supply device and a control device, and
the control device includes
a main connection circuit that includes a communication connection terminal for a predetermined communication method, and that transmits and receives a control signal related to supply control of power, which is supplied to the refrigeration device from the power supply device, via the communication connection terminal in a case where the power supply device is connected to the communication connection terminal, and
an auxiliary connection circuit that includes a digital output terminal and a digital input terminal, and that outputs a digital signal indicating an operation state of the refrigeration device from the digital output terminal and receives a digital signal for designating the operation state of the refrigeration device at the digital input terminal in a case where the power supply device is connected to the digital output terminal and the digital input terminal.
